**Europäisches Patentamt**

**European Patent Office**

**Office européen des brevets**

(11) Numéro de publication: **0 077 859**
**B1**

(12) **FASCICULE DE BREVET EUROPEEN**

(45) Date de publication du fascicule du brevet: **26.02.86**

(21) Numéro de dépôt: **81401727.3**

(22) Date de dépôt: **28.10.81**

(51) Int. Cl.⁴: **F 16 D 47/02, F 16 D 45/00, F 16 D 43/02, F 16 D 43/18, A 01 B 71/06**

(54) **Accouplement à friction, notamment pour machines de récolte.**

(43) Date de publication de la demande:
**04.05.83 Bulletin 83/18**

(45) Mention de la délivrance du brevet:
**26.02.86 Bulletin 86/09**

(84) Etats contractants désignés:
**AT CH DE FR GB IT LI NL**

(56) Documents cités:
**DE-C- 710 708**
**GB-A- 782 495**
**GB-A-1 061 418**
**US-A-2 899 033**
**US-A-4 049 099**

**TOOLING & PRODUCTION, vol.30, no.10, janvier 1965, Cleveland, Ohio (US)**

(73) Titulaire: **DEERE & COMPANY**
**1 John Deere Road**
**Moline Illinois 61265 (US)**

(72) Inventeur: **Magin, Ludwig**
**Am Deutschhof 2 + 4**
**D-6707 Schifferstadt (DE)**

(74) Mandataire: **Pruvost, Marc Henri et al**
**Cabinet ORES 6, Avenue de Messine**
**F-75008 Paris (FR)**

Courier Press, Leamington Spa, England.

## Description

Il est connu dans les machines de récolte, notamment dans le cas des faucheuses - conditionneuses et des récolteuses - hacheuses - chargeuses ou ensileuses, de protéger les organes de ces machines en interposant un accouplement à friction ou glissement et un accouplement à rattrapage dans la ligne de transmission entre l'arbre de prise de force du tracteur et la machine. Ces accouplements sont constitués normalement par deux dispositifs indépendants, qui sont intercalés en des points quelconques de la ligne de transmission de l'énergie motrice entre le tracteur et la machine. Ainsi, les organes de transmission doivent être interrompus en deux endroits et les arbres doivent être adaptés en vue de leur raccordement, ce que bien entendu augmente l'encombrement et la complexité des mécanismes, ainsi que le prix de revient.

En outre, les accouplements à friction ou glissement générelement utilisés sont du type à disques de friction soumis à l'action d'un ou plusieurs ressorts, et le plus souvent ils ne sont pas protégés vis-à-vis de l'humidité. Or les travaux de récolte dans le champ sont de façon connue à l'origine d'une attaque de l'accouplement à disques par l'humidité. Il est en conséquence nécessaire, pour le cultivateur, de démonter l'accouplement au moins avant la saison de récolte, pour nettoyer au besoin les disques et pour vérifier qu'ils ne "collent" pas entre eux sous l'effet de la corrosion, ce qui s'opposerait au glissement de l'accouplement et aurait pour conséquence un endommagement éventuel des organes de la machine montée en aval. En outre, un inconvénient de ce type d'accouplement réside dans le fait qu'en cas de remontage imparfait un défaut d'alignement des disques peut être à l'origine d'une rupture du moyeu de l'accouplement.

Un but de l'invention est de remédier à ces inconvénients de la technique antérieure et de réaliser un accouplement à friction agissant en même temps comme accouplement à rattrapage et présentant une structure telle que les organes de friction soient efficacement protégés vis-à-vis de l'humidité ou d'influences extérieures.

Bien que, dans l'ensemble de la description on se réfère à l'application d'un tel accouplement aux machines de récolte, compte tenu des avantages spécifiques qu'il présente pour cette application particulière, on comprendra toutefois que l'invention n'y est pas limitée et qu'elle couvre également les accouplements à friction présentant la structure décrite destinés à d'autres applications.

On a déjà proposé (Tooling & Production, Vol. 30, No. 10, Janvier 1965) de réaliser un accouplement à rattrapage comportant un porte-masselottes calé sur l'arbre d'un moteur et vers la périphérie duquel sont montées des masselottes en forme de linguets pouvant pivoter autour d'axes parallèles à l'axe de l'arbre du moteur, ce porte-masselottes étant monté à l'intérieur d'une poulie munie intérieurement de découpes ménageant des surfaces de butée orientées toutes dans le sens d'entraînement de la poulie par le porte-masselottes. Cette poulie est reliée par une courroie à un autre organe devant être entraîné.

Lors de la rotation de l'arbre du moteur, les masselottes viennent, sous l'effet de la force centrifuge, s'engager contre les surfaces de butée de la poulie, en entrînant cette dernière. Si le moteur s'arrête tandis que l'organe mené continue de tourner, la rotation de la poulie reliée à cet organe peut se poursuivre librement, étant donné que les masselottes échappent alors aux découpes intérieures de cette poulie.

Comme indiqué dans la Publication citée, cet accouplement est toutefois un accouplement à rattrapage sans glissement, de sorte qu'il ne peut en aucun cas convenir à une application aux machines du type mentionné ci-avant, qui exigent l'interposition d'un accouplement à friction dans la ligne d'entraînement, afin d'éviter des endommagements.

L'invention part de l'agencement connu précité pour réaliser un accouplement unique répondant aux besoins rencontrés.

L'invention est matérialisée dans un accouplement notamment pour machines de récolte destiné à établir une liaison d'entraînement entre des moyens d'entraînement et un arbre de sortie, du type dans lequel un porte-masselottes relié à ces moyens d'entraînement porte à sa périphérie des masselottes pouvant pivoter autour d'axes orientés parallèlement à l'arbre de sortie et est disposé à l'intérieur d'une partie en forme de couronne munie intérieurement de profilages avec lesquels ces masselottes peuvent venir en prise pour assurer l'entraînement de cette pièce en forme de couronne à partir des moyens d'entraînement lors de la rotation de ceux-ci, caractérisé en ce que la pièce en forme de couronne est constituée par une couronne de friction montée dans un corps en forme de cloche et munie à sa périphérie extérieure d'une garniture de friction appliquée élastiquement dans une relation de contact de friction contre la paroi périphérique cylindrique intérieure de ce corps en forme de cloche.

Suivant un mode de réalisation paraissant avantageux, la couronne de friction est subdivisée en segments et des moyens élastiques sont prévus entre les segments pour les écarter et presser la surface périphérique extérieure de ces segments contre la paroi périphérique cylindrique du corps de l'accouplement, des moyens de réglage étant combinés à ces organes élastiques pour régler la force d'application de ces segments contre cette paroi cylindrique du corps de l'accouplement. Ces moyens de réglage peuvent comporter, par exemple, une vis ou un axe de réglage de préférence autobloquant, relié à un excentrique ou à une came agissant sur un ou plusieurs organes élastiques tels que des ressorts montés entre les segments.

Les masselottes peuvent se présenter sous des formes diverses. Une solution paraissant avantageuse consiste à utiliser toutefois des masselottes constituées par des pièces en forme de linguets reliées à pivotement au porte-masselottes vers une extrémité afin de pouvoir basculer vers l'extérieur sous l'effet de la force centrifuge et s'engageant lors de leur basculement dans des découpes prévues dans la périphérie intérieure de la couronne de friction et ménageant de façon connue, vers l'avant quand on considère le sens de rotation de l'accouplement, des surfaces de butée pour les extrémités des masselottes, et vers l'arrière des rampes pour l'échappement des masselottes en cas de rattrapage du porte-masselottes par l'arbre de sortie de l'accouplement.

Le porte-masselottes peut être relié de toute manière désirée à l'arbre d'entrée de l'accouplement. Une solution paraissant avantageuse consiste à prévoir sur ce porte-masselottes deux pattes ou branches formant une chape pour le raccordement de l'arbre de prise de force du tracteur ou d'un arbre articulé relié à cet arbre de prise de force.

La structure est telle que les pièces mobiles et les organes de friction de l'accouplement soient tous logés à l'intérieur du corps en forme de cloche, de sorte qu'ils sont protégés vis-à-vis de l'humidité et des influences extérieures, et que les frais de réparation et d'entretien de l'accouplement sont nettement diminués par rapport aux solutions usuelles jusqu'ici. En outre, l'accouplement suivant l'invention, par sa double fonction, permet le montage d'un seul accouplement entre le tracteur et la machine de récolte, ce qui réduit l'encombrement et le prix de revient.

La description qui va suivre, faite en regard des dessins annexés, donnés à titre non limitatif, permettra de mieux comprendre l'invention.

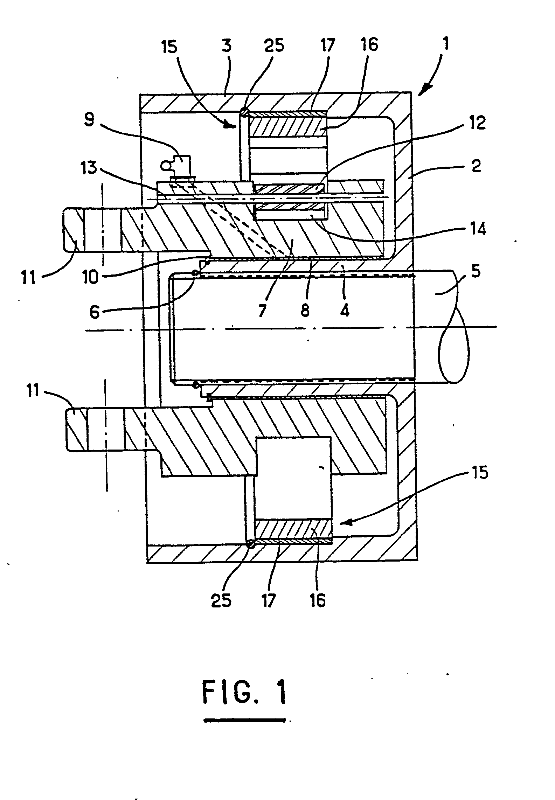

La Fig. 1 est une vue en coupe longitudinale d'un accouplement à friction suivant l'invention.

La Fig. 2 est une vue d'extrémité prise en regardant depuis le côté gauche sur la Fig. 1.

L'accouplement à friction représenté sur les dessins, désigné dans son ensemble par le référence 1, comprend un corps 2 en forme de cloche muni d'une paroi périphérique extérieure 3 de forme cylindrique et d'un moyeu intérieur 4. Ce corps 2 est calé par son moyeu 4, par exemple par clavetage, sur l'arbre de sortie 5 de l'accouplement. Il est retenu dans la position axiale désirée sur cet arbre 5 par un jonc 6.

Un porte-masselottes 7 est monté à rotation autour du moyeu 4 par un coussinet antifriction formant palier lisse 8, qui est lubrifié à partir d'un graisseur extérieur 9. L'ensemble formé par le porte-masselottes 7 et le coussinet 8 est retenu axialement sur la moyeu 4 au moyen d'une bague élastique fendue ou d'un jonc 10.

Le porte-masselottes 7 est prolongé à l'opposé du fond de la pièce en forme de cloche 2 formant le corps de l'accouplement par deux pattes opposées 11 formant une chape pour la réception d'un joint d'arbre articulé, par exemple pour le raccordement à l'arbre de prise de force d'un tracteur agricole.

Des masselottes 12, qui sont dans l'exemple considéré au nombre de trois, sont montées de façon pivotante, vers une extrémité, autour d'axes 13 s'étendant parallèlement à l'arbre 5 à l'intérieur du porte-masselottes 7. Ces masselottes 12 peuvent ainsi pivoter librement autour de ces axes dans des découpes appropriées 14 du porte-masselottes.

Il est prévu, à l'intérieur du corps I en forme de cloche, une couronne de friction désignée dans son ensemble par la référence 15, qui dans le cas présent est formée par deux segments 16 munis sur leur surface en arc de cercle extérieure d'une garniture de friction 17. Les dimensions des segments sont calculées de telle sorte qu'ils viennent se loger dans la paroi périphérique 3 du corps en ménageant éventuellement un très faible jeu ou à frottement doux quand leurs faces terminales sont en contact. Pour obtenir un contact de friction approprié réglable entre la garniture de friction 17 et la surface interne de la paroi périphérique cylindrique 3 du corps 2, il est prévu dans une face terminale de chaque segment 16 un logement 18 dans lequel est monté à ressort 19 et, au voisinage de l'autre face terminale du segment, une vis de réglage 20 dont est solidaire un excentrique 21. Ainsi, la vis 20 permet, par sa rotation, de régler l'appui de l'excentrique 21 sur le ressort 19 et en conséquence l'écartement entre les segments et ainsi la force de friction de la garniture 17 contre la paroi périphérique 3 du corps 2, tout en conservant l'élasticité désirable. Les vis de réglage 21 sont judicieusement de type autobloquant.

Les segments de la couronne de friction 15 présentent dans leur périphérie intérieure, des profilages 22 formés par une découpe ménageant, vers l'avant quand on considère le sens de rotation de l'accouplement, une surface de butée 23 contre laquelle chaque masselotte 12 peut venir s'appliquer par son extrémité libre quand elle est soumise à l'effet d'une force centrifuge suffisante, comme expliqué plus loin. Cette découpe ménage en outre une rampe 24 orientée vers l'arrière dans le sens d'entraînement de la couronne de friction 15 et dont le rôle sera également indiqué plus loin.

Un jonc 25 assure le positionnement de la couronne de friction 15 à l'intérieur du corps 2 de l'accouplement.

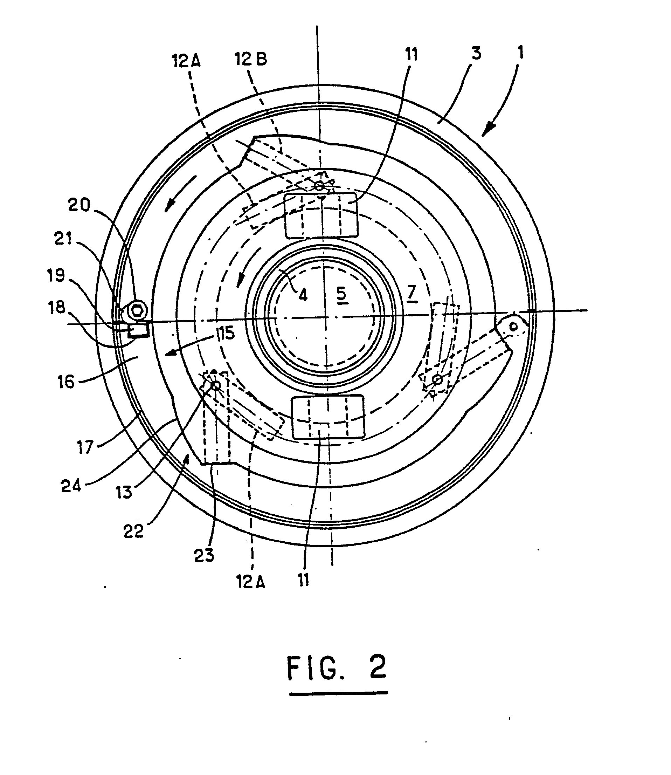

Le fonctionnement de l'accouplement à friction suivant l'invention se comprend aisément à la lecture de la description qui précède. Dans la condition de repos de l'ensemble, si aucun entraînement n'est fourni au porte-masselottes par les pattes 11 reliées à l'arbre de prise de force du tracteur ou à un arbre d'entraînement articulé, les masselottes 12 occupent la position indiquée en pointillé en 12A sur la Fig. 2, vers laquelle elles sont rappelées par exemple par un ressort de torsion (non représenté). Dans cette position, aucune liaison cinématique n'existe entre le porte-masselottes 7 et la couronne de friction 15 et ainsi entre ce porte - masselottes et l'arbre de sortie 5. Lorsque le porte - masselottes 7 est entraîné en rotation, les masselottes 12 sont soumises à l'effet de la force centrifuge. Pour une régime de rotation suffisant, les masselottes 12 basculent autour de l'axe 13 jusqu'à la position 12B et leur extrémité libre vient attaquer la surface de butée 23 d'une découpe 22 de la garniture de friction 15, en assurant ainsi l'entraînement de cette dernière et par la friction exercée sur la paroi périphérique 3 du corps 2, également celui de l'arbre de sortie 5 de l'accouplement. Cet entraînement est réalisé dans les conditions de sécurité requises des accouplements à friction, un patinage pouvant se produire entre la couronne de friction 15 et la paroi périphérique du corps 2 en cas de blocage intempestif ou de surcharge dangereuse dans la machine de récolte montée en aval, le couple résistant pouvant être absorbé par l'accouplement étant réglable au moyen des vis 20.

En cas d'arrêt brutal de l'entraînement, donc du porte-masselottes 7, l'accouplement agit par contre comme un accouplement à rattrapage, étant donné que la couronne de friction entraînée par le corps 2 et ainsi par la machine montée en aval peute déplacer dans le sens de rotation plus rapidement que le porte-masselottes 7, les masselottes 12 échappant aux découpes 22 de la couronne de friction 15 par la rampe 24 orienté vers l'arrière dans chaque découpe 22 si l'on considère le sens de rotation.

Ainsi, l'invention permet de réaliser un accouplement agissant à la fois comme accouplement à friction et comme accouplement à rattrapage, protégé vis-à-vis des influences extérieures, notamment de l'humidité, et présentant des avantages notables en vue d'une utilisation entre l'arbre de prise de force d'un tracteur agricole et une machine de récolte attelée à celui-ci.

**Revendications**

1. Accouplement, notamment pour machines de récolte, destiné à établir une liaison d'entraînement entre des moyens d'entraînement et un arbre de sortie (5), du type dans lequel un porte-masselottes (7) relié à ces moyens d'entraînement porte à sa périphérie des masselottes (12) pouvant pivoter autour d'axes (13) orientés parallèlement à l'arbre de sortie et est disposé à l'intérieur d'une partie en forme de couronne munie intérieurement de profilages avec lesquels ces masselottes peuvent venir en prise pour assurer l'entraînement de cette pièce en forme de couronne à partir des moyens d'entraînement lors de la rotation de ceux-ci, caractérisé en ce que la pièce en forme de couronne est constituée par un couronne de friction (15) montée dans un corps en forme de cloche (2) et munie à sa périphérie extérieure d'une garniture de friction (17) appliquée élastiquement dans une relation de contact de friction contre la paroi périphérique cylindrique intérieure de ce corps en forme de cloche.

2. Accouplement suivant la revendication 1, caractérisé en ce que la couronne de friction (15) est divisée en segments (16) et en ce que des moyens élastiques (19) sont prévus entre les segments pour les écarter et presser la garniture de friction (17) de la couronne (15) contre la paroi conjuguée (3) du corps (2) de l'accouplement, des moyens de réglage (20, 21) étant combinés à ces moyens élastiques (19).

3. Accouplement suivant la revendication 2, caractérisé en ce que ces moyens de réglage comprennent chacun un axe ou une vis de réglage (20) de préférence autobloquant, relié à un excentrique ou à une came (21) agissant sur au moins un ressort (19) monté entre les segments (16).

4. Accouplement suivant l'une quelconque des revendications précédentes, caractérisé en ce que les masselottes (12), qui sont constituées par des pièces en forme de linguets reliées à pivotement au porte-masselottes (7) vers une extrémité afin de pouvoir basculer vers l'extérieur sous l'effet de la force centrifuge, s'engagent lors de leur basculement dans des découpes (22) prévues dans la périphérie intérieure de la couronne de friction (15) et ménageant de façon connue, vers l'avant quand on considère le sens de rotation de l'accouplement, des surfaces de butée (23) pour les extrémités des masselottes (12), et vers l'arrière des rampes (24) pour l'échappement des masselottes (12) en cas de rattrapage du porte-masselottes (7) par l'arbre de sortie (5) de l'accouplement.

5. Accouplement suivant l'une quelconque des revendications précédentes, caractérisé en ce que tous les éléments de l'accouplement, à l'exclusion des moyens d'entraînement du porte-masselottes (7), sont logés à l'intérieur du corps en forme de cloche (2), par lequel ils sont protégés.

**Patentansprüche**

1. Kupplung, insb. Für Erntemaschinen, die bestimmt ist, eine Abtriebsverbindung zwischen Antriebsmitteln und einer Ausgangswelle (5) zu schaffen des Typs, bei dem ein Gewichteträger (7), der mit den Antriebsmitteln verbunden ist, an seinem Umfang Gewichtselemente (12) trägt, die um Achsen (13) schwenken können, welche parallel zur Ausgangswelle orientiert sind, und der im Inneren eines Teils in Form eines Ringes angeordnet ist, welcher im Inneren Profile aufweist, mit denen die Gewichtselemente in Eingriff gelangen können, um den Antrieb des ringförmigen Stückes durch die Antriebsmittel sicherzustellen, wenn diese rotieren, dadurch gekennzeichnet, daß das ringförmige Stück durch einen Reibring (15) gebildet ist, der in einem glockenförmigen Körper (2) montiert ist, und an einem äußeren Umfang mit einer Reibungsgarnitur (17) ausgerüstet ist, welche elastisch in Reibungskontaktbeziehung gegenüber dem zylindrischen inneren Umfangsmantel des glockenförmigen Körpers steht.

2. Kupplung nach Anspruch 1, dadurch gekennzeichnet, daß der Reibring (15) in Segmente (16) unterteilt ist und daß die elastischen Mittel (19) zwischen den Segmenten vorgesehen sind, um diese zu spreizen und die Reibungsgarnitur (17) des Ringes (15) gegen den ihr zugeordneten Mantel (3) des Kupplungskörpers (2) zu pressen, wobei Einstellmittel (20, 21) mit den elastischen Mitteln (19) kombiniert sind.

3. Kupplung nach Anspruch 2, dadurch gekennzeichnet, daß die Einstellmittel jeweils eine Achse oder Einstellschraube (20), vorzugsweise vom selbstsperrenden Typ, umfassen, welche mit einem Exzenter oder mit einem Nocken (21) verbunden sind, der auf wenigstens eine Feder (19) einwirkt, welche zwischen den Segmenten (16) angeordnet ist.

4. Kupplung nach irgendeinem der voranstehenden Ansprüche, dadurch gekennzeichnet, daß die Gewichtselemente (12), die durch sperrklinkenförmige Stücke gebildet und zu dem einen Ende hin schwenkbar mit dem Gewichteträger (7) verbunden sind, um unter der Zentrifugalkraftwirkung nach außen schwenken zu können, während ihrer Schwenkbewegung in Ausschnitte (22) eingreifen, die im inneren Umfang des Reibringes (15) angeordnet und in bekannter Weise nach vorne zu, wenn man den Drehsinn der Kupplung in Betracht zieht, mit Anschlagflächen (23) für die Enden der Gewichtselemente (12) und nach hinten zu mit Rampen (24) zum Ausweichen der Gewichtselemente (12) im Falle des Einholens des Gewichteträgers (7) durch die Ausgangswelle (5) der Kupplung versehen sind.

5. Kupplung nach irgendeinem der voranstehenden Ansprüche, dadurch gekennzeichnet, daß alle Kupplungselemente ausschließlich der Antriebsmittel für den Gewichtsträger (7) im Inneren des glockenförmigen Körpers (2) angeordnet sind, durch den sie geschützt sind.

**Claims**

1. A clutch, in particular for harvesters, which is intended to establish a drive connection between drive means and an output shaft (5), of the type in which a weight carrier (7) connected to said drive means carries at its periphery weights (12) which can pivot about axes (13) that are disposed parallel to the output shaft, and is disposed within a member in the form of a ring, which is internally provided with shaped configurations with which said weights can come into engagement to provide the drive to the ring member from the drive means upon rotation thereof, characterised in that the ring member is formed by a friction ring (15) which is mounted in a bell-shaped body (2) and provided at its external periphery with a friction lining (17) which is resiliently applied in a frictional contact relationship against the internal cylindrical peripheral surface of said bell-shaped body.

2. A clutch according to claim 1 characterised in that the friction ring (15) is divided into segments (16) and that resilient means (19) are provided between the segments for moving them away from each other and pressing the friction lining (17) of the ring (15) against the conjugate wall (3) of the body (2) of the clutch, adjusting means (20, 21) being combined with said resilient means (19).

3. A clutch according to claim 2 characterised in that said adjusting means each comprise an adjusting screw or spindle (20) which is preferably self-locking and which is connected to an eccentric or to a cam (21) acting on at least one spring (19) mounted between the segments (16).

4. A clutch according to any one of the preceding claims characterised in that the weights (12) which are formed by pawl-like members pivotally connected to the weight carrier (7) towards one end in order to be capable of swinging outwardly under the effect of centrifugal force engage upon outward swinging movement thereof into recesses (22) which are provided in the internal periphery of the friction ring (15) and which in known manner provide, in a forward direction when considering the direction of rotation of the clutch, abutment surfaces (23) for the ends of the weights (12) and, in a rearward direction, ramps (24) for disengagement of the weights (12) in the event that the weight carrier (7) is overtaken by the output shaft (5) of the clutch.

5. A clutch according to any one of the preceding claims characterised in that all the elements of the clutch, except for the means for driving the weight carrier (7), are housed within the bell-shaped body (2) by which they are protected.

FIG. 1

FIG. 2

2